# EUROPEAN PATENT APPLICATION

(11) **EP 4 549 884 A2**
(43) Date of publication of application: **07.05.2025**
(21) Application number: 24209080.1
(22) Date of filing: 26.10.2024
(51) Int. Cl.: G01D 11/30, F16B 5/02, F16B 9/00

(54) **SENSOR MOUNT FIXING**

(30) Priority: 01.11.2023 US 202363595143 P; 24.10.2024 US 202418925808
(71) Applicant: HellermannTyton Corporation, Milwaukee, WI 53224 (US)
(72) Inventor: Toll, Michael, Whitefish Bay, Wisconsin (US); Cors, Mark W., St. Francis, Wisconsin (US); Klos, Scott G., Grafton, Wisconsin (US); Mann, Alexander, Port Washington, Wisconsin (US)
(74) Representative: Hernandez, Yorck

(57) **Abstract**

Described are aspects of sensor mount fixing techniques and apparatuses that are configured to receive, secure, and/or support one or more sensors relative to a support structure of a workpiece. In aspects, a sensor mount fixing includes a body portion configured to mount on a support structure. The body portion includes a sensor mount portion configured to receive a sensor housing through the body portion. A sensor mount fixing may include a locknut retainer configured to retain a first locknut engaged with the sensor housing against rotation during a turning (e.g., a tightening, a loosening) of a second locknut engaged with the sensor housing. A sensor mount fixing may include a clamp portion configured to clamp onto the sensor housing to retain the sensor housing.

## Description

### CROSS-REFERENCE TO RELATED APPLICATION(S)

This application claims the benefit of U.S. Provisional Patent Application Serial No. 63/595,143 filed on November 1, 2023, the disclosure of which is incorporated by reference herein in its entirety.

### BACKGROUND

In industrial and other applications, a technician may use a sensor to detect and/or measure a physical property as data. The sensor may be mounted by the technician in a suitable physical position through use of a sensor mount fixing. For example, the technician may use a metal bracket (e.g., a mounting flange) to attach the sensor to a workpiece (e.g., a surface of the workpiece). Many prior sensor mount fixings are configured to attach the sensor to the workpiece in a fixed position and are not adjustable (e.g., do not provide for side-to-side adjustment for the sensor, do not provide for vertical adjustment of the sensor). The adjustability of a sensor mount can be an important feature to increase the accuracy of the sensor and to ensure reliable data collection by the sensor.

Many sensors include a housing that houses a measurement unit of the sensor. The sensor housing may be cylindrical, barrel-shaped, or another shape. The surface of the sensor housing may be threaded and configured to receive at least one threaded locknut (e.g., a lock nut, a jam nut, a flat nut) that is utilized to attach the sensor housing to the mounting flange. The mounting flange (e.g., a sensor mount) is utilized to attach the sensor to a support structure (e.g., a housing panel) of a workpiece (e.g., a machine). For example, the attachment may be through a first locknut that bears against a first side (e.g., an inner surface) of the mounting flange and a second locknut that bears against a second side (e.g., an outer surface) of the mounting flange, and the mounting flange may be jammed or otherwise compressed therebetween. The pair of locknuts are effectively tightened against each other with the mounting flange therebetween to provide a clamping force. In this way, at least one locknut (e.g., a pair of locknuts) may be utilized by an installer to attach the sensor housing to a sensor mount fixing. However, due to frictional forces, as the first locknut is turned, the sensor housing and/or the second locknut are prone to rotate as well, which can make installation a two-handed operation for the installer. As a result, an installer is often required to utilize a first tool (e.g., a first wrench, a socket) on the first locknut and a second tool (e.g., a second wrench, a socket) on the sensor housing and/or second locknut to tighten the first locknut. As a result, installation is complicated and takes additional installation time.

### SUMMARY

Described herein and illustrated herewith are aspects of sensor mount fixing techniques and apparatuses (e.g., a sensor mount fixing) that are configured to receive, secure, and/or support one or more sensors relative to a support structure of a workpiece.

In some aspects, the techniques described herein relate to a fixing including: a body portion, configured to mount on a support structure, the body portion including: a sensor mount portion configured to to receive a sensor housing through the body portion; and a locknut retainer configured to retain a first locknut engaged with the sensor housing against rotation during at least one of a turning (e.g., a tightening, a loosening) of a second locknut engaged with the sensor housing.

In some aspects, the techniques described herein relate to a fixing including: a body portion configured to mount on a support structure, the body portion including: a sensor mount portion configured to receive a sensor housing through the body portion; and a clamp portion configured to clamp onto the sensor housing to retain the sensor housing.

This Summary is provided to introduce simplified concepts of sensor mount fixing techniques and apparatuses, which are further described below in the Detailed Description and are illustrated in the Drawings. This Summary is not intended to identify essential features of the claimed subject matter, nor is it intended for use in determining the scope of the claimed subject matter.

### BRIEF DESCRIPTION OF THE DRAWINGS

The details of one or more implementations of sensor mount fixing techniques and apparatuses are described with reference to the following Drawings.
FIG. 1A is an exploded perspective view of a first embodiment of a sensor mount fixing, which shows the environment.
FIG. 1B is an assembled perspective view of the sensor mount fixing of FIG. 1A, which shows the environment.
FIG. 1C is a plan view of the sensor mount fixing of FIG. 1A.
FIG. 1D is a front view of the sensor mount fixing of FIG. 1A.
FIG. 1E is a back view of the sensor mount fixing of FIG. 1A.
FIG. 1F is a right-side view of the sensor mount fixing of FIG. 1A.
FIG. 1G is a cross-section view along line 1G-1G in FIG. 1B.
FIG. 2A is a perspective view of a second embodiment of a sensor mount fixing.
FIG. 2B is a plan view of the sensor mount fixing of FIG. 2A.
FIG. 3A is an assembled perspective view of a third embodiment of a sensor mount fixing, which shows the environment.
FIG. 3B is a back view of the sensor mount fixing of FIG. 3A.
FIG. 3C is a plan view of the sensor mount fixing of FIG. 3A.
FIG. 3D is a right-side view of the sensor mount fixing of FIG. 3A.
FIG. 4A is an assembled perspective view of a fourth embodiment of a sensor mount fixing, which shows the environment.
FIG. 4B is a back view of the sensor mount fixing of FIG. 4A.
FIG. 5A is an exploded perspective view of a fifth embodiment of a sensor mount fixing, which shows the environment.
FIG. 5B is an assembled perspective view of the sensor mount fixing of FIG. 5A, which shows the environment.
FIG. 5C is a plan view of the sensor mount fixing of FIG. 5A.
FIG. 5D is a front view of the sensor mount fixing of FIG. 5A.
FIG. 5E is a right-side view of the sensor mount fixing of FIG. 5A.

### DETAILED DESCRIPTION

Described herein and illustrated herewith are example implementations and embodiments of sensor mount fixing techniques and apparatuses (e.g., a sensor mount fixing, a fixing) that are configured to receive, secure, and/or support one or more sensors relative to a support structure of a workpiece. Before explaining the example implementations and embodiments of sensor mount fixing techniques and apparatuses in detail, it is to be understood that the sensor mount fixing techniques and apparatuses are not limited in their applications to the details of the particular arrangements described and illustrated since the disclosed sensor mount fixing techniques and apparatuses are capable of other embodiments. Also, the terminology used herein is for the purpose of description and not of limitation.

In some aspects, the techniques and apparatuses include sensor mount fixings that are configured to attach to a support structure. The attachment may be a removable attachment. A support structure may include the surface of a workpiece (e.g., a machine, a cabinet, a housing, a frame, an enclosure, a vehicle chassis, a panel, a rail, a support beam, and the like) and may include a mount surface upon which the fixing can be mounted. A mount surface may define a mount aperture (e.g., a slot, a channel, a bore, a threaded hole) to which the fixing can be mounted (e.g., via a fastener). For example, the mount aperture may be configured to receive a mechanical fastener (e.g., a screw, a bolt). The sensor mount fixings are configured to receive, secure, and/or support a sensor. A sensor is a device that is utilized to detect and/or measure a physical property as data. Examples of sensors include, but are not limited to, pressure sensors, temperature sensors (e.g., a thermocouple), flow sensors, level sensors, mechanical sensors, proximity sensors, and the like.

In some aspects, the techniques and apparatuses described herein relate to a fixing that includes a body portion that is configured to mount on a support structure. The fixing may further include a base portion that is configured to mount the body portion on the support structure. The base portion may extend from the body portion. The fixing (e.g., the body portion, the base portion) may include a connector portion that is configured to attach to the support structure. The attachment may be a removable attachment. A connector portion may include any common connection manner, including, but not limited to, a fastener (e.g., a blind hole fastener, a clamp fastener, a mechanical fastener (e.g., a screw mount), a T-nut fastener for a T-slot metal frame, an arrowhead fastener, a fir-tree fastener, a mounting edge clip, a twist-lock fastener configured for receipt into a slot of a rail, a weld stud mount, a cable attachment, a hose attachment), an adhesive fastener (e.g., double-sided adhesive tape), a weld, a magnet, a friction fit, and the like, and combinations thereof (e.g., a fastener and an adhesive fastener, an adhesive fastener and a magnet). A connector portion may be configured to engage an elongated fastener (e.g., a stud, a threaded bolt) that extends from the workpiece, may be configured to clamp onto an edge of the workpiece (e.g., utilizing an edge clip), and/or the like.

In some aspects, the connector portion includes at least one mount hole that is defined in the fixing (e.g., in one or more of the body portion or the base portion). Through a plurality of mount holes, multiple mount positions for the fixing may be facilitated. A mount hole may be configured to receive a mechanical fastener (e.g., a screw, a bolt) and may be tapped with threads. The mechanical fastener may be configured to engage a mount aperture (e.g., a slot, a channel, a bore, a threaded hole) that is defined in the mount surface of the workpiece to mount the fixing to the workpiece.

The connector portion (e.g., a base portion) may be configured for adjustable attachment (e.g., in multiple mount positions) to the workpiece. In some aspects, the connector portion includes at least two mount holes. In this configuration, a technician may pass a first portion (e.g., a threaded shaft) of a mechanical fastener (e.g., a screw) through one or more of the mount holes into the workpiece to attach the fixing to the workpiece at a desired position. In some aspects, the connector portion includes at least one arc-shaped mount hole and a pivot mount hole. In this configuration, a technician may pass threads of a first mechanical fastener (e.g., a screw) through the pivot mount hole and into the workpiece to create a pivot point. The fastener may be left loose enough that the fixing can be pivoted around the pivot point to a desired position by the technician. Upon positioning in the desired position, the technician can tighten the first mechanical fastener and/or a second mechanical fastener passed through a second mount hole to fix the fixing in position. In aspects, the second mount hole is an arc-shaped mount hole that is configured to permit rotation of the connector portion at the pivot point while first and second mechanical fasteners engage the respective first and second mount holes. In such a configuration, the fastener in the arc-shaped mount hole could be loosened and the connector portion pivoted at the pivot point.

In some aspects, the body portion includes a sensor mount portion that is configured to connect to a sensor to mount the sensor to the fixing. The sensor may include a sensor housing that houses the measurement unit of the sensor. The sensor mount portion may be configured to receive at least a portion of the sensor housing (e.g., through the body portion). The sensor housing may be cylindrical, barrel-shaped, or another shape.

In some aspects, the sensor mount portion includes a slot that is configured to slidingly receive the sensor (e.g., a sensor housing). The slot may have an open top end at the top side of the body portion and a closed bottom end that is opposite the open top end. The slot may extend through the body portion in a direction that is perpendicular to the base portion or another angle. The slot may define a pair of vertically extending arms that are spaced apart to define the slot. The slot may be U-shaped, V-shaped, or another shape. The slot may be configured to permit vertical sensor adjustment of the sensor. For example, the sensor may be mounted on the sensor mount portion at positions along the slot. In this way, the fixing may be configured for adjustable attachment to the sensor.

In some aspects, the sensor mount portion includes an aperture defined through the sensor mount portion. The aperture is configured to receive the sensor housing (e.g., a cylindrical housing of the sensor) therethrough. In aspects, the aperture may be circular, ovular, or another shape. For non-circular shapes, the slot may be configured to permit a vertical sensor adjustment of the sensor. For example, the sensor may be mounted on the sensor mount portion at positions along an ovular-shaped slot. In this way, the fixing may be configured for adjustable attachment to the sensor.

The surface of the sensor housing may be threaded and configured to receive at least one threaded locknut. In some aspects, the body portion includes a locknut retainer that is configured to retain a first locknut engaged with the sensor housing against rotation during a turning (e.g., a tightening, a loosening) of a second locknut engaged with the sensor housing. In this way, the threaded locknut(s) may be utilized to attach the sensor housing to the fixing. When engaged, a locknut may abut against an outer surface of the locknut retainer or against an inner surface of the locknut retainer.

In some aspects, the locknut retainer defines a recess dimensioned to accommodate the first locknut. The recess may define an open-topped groove configured to receive the first locknut. The recess may include a recess bottom (e.g., a flange) configured to receive a face of the first locknut. In this configuration, the locknut retainer defines a locknut pocket configured to receive a locknut. In aspects, the locknut pocket is molded in the body portion. In aspects, the locknut pocket is defined in the body portion through one or more rear slots, lanced louvers, protruding elongated anti-rotation members, and the like. A locknut pocket may include at least one stamped raised-edge flange.

A locknut pocket may be located on an inner side (e.g., an inside surface) of the body portion and/or an outer side (e.g., an outside surface) of the body portion. The locknut pocket may operate as an anti-rotation feature that holds a first locknut (e.g., an inner locknut, an outer locknut) from rotation while a technician tightens a second locknut (e.g., an outer locknut, an inner locknut), which may enable the technician to use a single tool (e.g., a wrench, a socket) to tighten one of the first or second locknuts and facilitate a single-tool installation of the sensor. In this way, the fixing may be configured for quick and efficient attachment to the sensor.

In some aspects, the recess may include a plurality of side walls that correspond to one or more sides of the sensor (e.g., sides of the sensor housing, sides of the locknut positioned in the recess) to limit a rotational movement of the sensor (e.g., limit a rotational movement of the locknut positioned in the recess). Two or more of the sidewalls may be parallel to one another. The sidewalls may extend in planes perpendicular to a plane of the base portion. In some aspects, the first locknut is a hexagonal locknut (e.g., a hex nut) and the recess includes a hexagonal profile section configured to receive the first locknut.

The locknut retainer may define an outer side opposite an inner side that defines the recess bottom. In this configuration, the outer side is configured to receive a face of the second locknut with the recess bottom disposed between the first locknut and the second locknut. In another configuration, the outer side defines the recess bottom and the inner side is configured to receive a face of the second locknut with the recess bottom disposed between the first locknut and the second locknut.

In some aspects, the fixing includes a saddle portion that is configured for connection with an elongated article (e.g., wires, hoses, tubes, cables, conduit, and the like) and/or bundles thereof. The saddle portion may be a cable tie mount. The saddle portion may be configured to connect with a strap (e.g., a cable tie, strapping material, a hook-and-loop fastening strap, a plastic band, a metal band, string, twine, a wire, and the like). For example, the fixing may include a saddle portion that is configured to connect with a strap. The saddle portion may extend from the surface mount portion. The saddle portion defines at least one strap mount that is configured to receive a strap to attach the elongated article(s) to the saddle portion of the fixing. In some aspects, the strap mount defines a passageway through the saddle portion that is configured to receive the strap to attach an elongated article to the fixing. In aspects, the saddle portion defines a first strap mount and a second strap mount. A strap mount may define a ramp portion that is configured to guide an end of a strap through a passageway of the strap mount. A technician may coil or neatly store excess cable (e.g., in the form of a service loop) and attach the excess cable to the saddle portion utilizing a strap (e.g., a cable tie).

In some aspects, the saddle portion extends from the surface mount portion at an angle (e.g., at a bend) relative to a plane of the surface mount portion to provide easy access to the strap mount to a technician. A strap mount may be oriented in a position to receive a strap. The orientation may enable the technician to slide a tail of the strap (e.g., cable tie) across the surface mount portion and/or the support structure and through the strap mount openings. In aspects, this can be a single-handed operation for the technician. In this way, a technician can pass a portion of a strap through the passageway while the fixing is attached to the support structure of the workpiece. The strap mount may extend past the bend to allow direct access for a strap to pass through the passageway, which may provide easy access to the strap mount.

In some aspects, the saddle portion extends from the surface mount portion at a first end of the surface mount portion and the base portion includes a flange portion that extends from the surface mount portion (e.g., at a second end of the surface mount portion). In such a configuration, the first and second ends are opposite ends of the surface mount portion. The flange portion may be configured to orient the base portion relative to the body portion. In aspects, the flange portion extends generally perpendicularly from the surface mount portion to position the sensor housing generally parallel to the plane of the base portion. In this way, the base portion may be disposed generally perpendicular to the body portion. In other aspects, the flange portion extends at another angle from the surface mount portion.

In some aspects, the body portion further includes one or more sensor alignment indicia that are provided as a visual reference point to guide a technician to mount a sensor to the sensor mount portion. The sensor alignment indicia may guide a technician to align and/or position a sensor in a center position, a low position, a high position, and the like. The sensor alignment indicia may include location grooves, marks, notches, and the like, which are defined in at least one surface of the body portion. For example, the sensor alignment indicia may include one or more notches located in an outer edge of the body portion. The sensor alignment indicia may be configured as an elevation reference point that indicates the default installed height of the sensor when the center of sensor housing is installed resting in or on the bottom of a cradle of the body portion. In this way, the technician can increase the desired sensor housing elevation by raising the sensor housing above the bottom of the cradle. The total raised elevation height can be determined by measuring the elevation reference point in relation to the center of the sensor housing.

One or more of the components (e.g., a base portion, a body portion) of a described sensor mount fixing may be integrally formed of a suitable material(s) through one or more of an injection-molding process, an additive manufacturing process (e.g., a fused deposition modeling (FDM) process, a fused deposition modeling (FDM) process, a three-dimensional (3D) printing process), or another suitable process. The components of a described sensor mount fixing may be formed (e.g., fabricated, molded, stamped) of any suitable material, including, but not limited to, metals, ceramics, polymers (e.g., polymeric material), and composites. Suitable polymeric materials for one or more of the components of a described sensor mount fixing may include one or more of polycarbonate, polyamide, polyamide 6.6, nylon 6, nylon, polypropylene, polyphenylene sulfide (PPS), polystyrene, polyether ether ketone, polyaryletherketone, polyacetal, polybutylene terephthalate, acrylonitrile butadiene styrene (ABS), ABS with additional butadiene content, ABS 3D printing filament used in a fused deposition modeling (FDM) printer, ABS 3D printing filament used in a fused filament fabrication (FFF) printer, styrene butadiene rubber (SBR), SBR with additional rubber content, a stiff polymer resin blended with an elastomer, and the like, and/or copolymers. Suitable metal materials for one or more of the components of a described sensor mount fixing include steel, spring steel, stainless steel, galvanized steel, zinc-plated steel, and the like.

One or more of the components of a described sensor mount may be formed of the same material and/or same material type as the other components. For example, a base portion and a body portion may both be formed of a polymeric material, a base portion and a body portion may both be formed of the same polymeric material, a base portion and a body portion may both be formed of different polymeric materials, and the like. In some aspects, the base portion and the body portion are formed at least in part of at least one polymeric material. In some aspects, the base portion and the body portion are formed at least in part of at least one metal material. One or more of the components of a described sensor mount may be formed of a different material or different material type than the other components. For example, the base portion may be formed at least in part of a metal material and the body portion may formed at least in part of a polymeric material. A plastic body portion may attach to a metal base portion through a suitable fabrication process, which may include overmolding, heat staking, snap-fit attachment, a mechanical fastening, and the like. The utilization of a hybrid construction (e.g., a plastic body portion and a metal base portion) may optimize strength (e.g., the metal base portion may permit the use of high-torque mounting bolts) and weight (e.g., the plastic body portion may optimize weight). The utilization of a hybrid construction may eliminate a ground contact of the sensor.

In some aspects, the fixing includes a clamp portion that is configured to clamp onto the sensor housing to retain the sensor housing. In this way, a fixing may provide for a quick and adjustable mounting of the sensor on the fixing. In some aspects, the clamp portion includes an over-center mechanism (e.g., an over-center cam) that is configured to hold the sensor in place. For example, the clamp portion may include a receiver portion configured to receive the sensor housing and a lever arm pivotally connected to the receiver portion. The clamp portion may be configured to drive the lever arm from an unlocked position over center to a locked position. In aspects, a technician may operate the clamp portion to drive the lever arm from the unlocked position over center to the locked position. The receiver portion may flex to facilitate the over-center action. In the locked position, the clamp portion engages with the sensor housing to hold the sensor housing in the receiver portion. In such a configuration, no tools may be required to secure the sensor to the body portion. The receiver portion may be configured to receive a sensor housing inserted at a 45-degree angle, which may make it easier for the clamp portion to be opened when positioned against a wall or another planar surface.

In some aspects, the clamp portion includes a first connector (e.g., a first clamp member) that has a first side opposite a second side, a second connector (e.g., a second clamp member) that includes a second side, and a hinge member that hingedly connects the second side of the first connector to the second side of the second connector. The first connector includes a first lock mechanism and the second connector includes a second lock mechanism. The first and second lock mechanisms are configured to lock a position of respective second ends of the first and second connectors together around the sensor housing with the sensor housing in a passageway defined between the first and second connectors. The clamp portion (e.g., the first connector, the second connector) may be configured to receive a sensor housing inserted at a 45-degree angle, which may make it easier for the clamp portion to be opened when positioned against a wall or another planar surface.

In some aspects, the fixing includes a clamp portion that is configured to clamp onto the sensor housing to retain the sensor housing. The clamp portion may define a cradle portion that is configured to receive the sensor housing and the body portion may include at least one strap mount configured to connect with at least one strap (e.g., a cable tie, strapping material, a hook-and-loop fastening strap, a plastic band, a metal band, string, twine, a wire, and the like) to clamp the sensor housing into the cradle portion. The strap mount may define a passageway through the body portion that is configured to receive the strap to loop around the sensor housing. In aspects, the cradle portion may include a cradle that is U-shaped or V-shaped in cross-section.

In some aspects, the techniques and apparatuses described herein relate to a fixing that includes a base portion and a body portion. The base portion includes a surface mount portion configured to mount the base portion to a support structure. The surface mount portion defines at least one mount hole therethrough that is configured to receive a fastener. The surface mount portion defines a saddle portion that extends from the surface mount portion and defines at least one strap mount configured to receive a strap. The surface mount portion defines a flange portion that extends from the surface mount portion. The body portion extends from the flange portion of the base portion and is oriented by the flange portion relative to the base portion. The body portion includes a sensor mount portion configured to receive a sensor housing. The body portion includes a locknut retainer configured to retain a first locknut engaged with the sensor housing against rotation during a turning (e.g., a tightening, a loosening) of a second locknut engaged with the sensor housing.

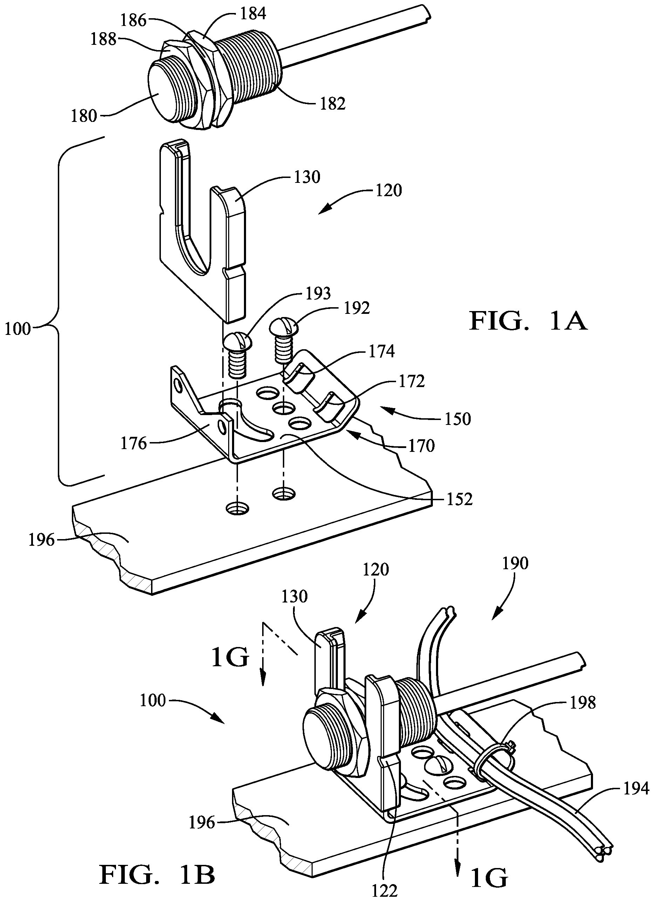

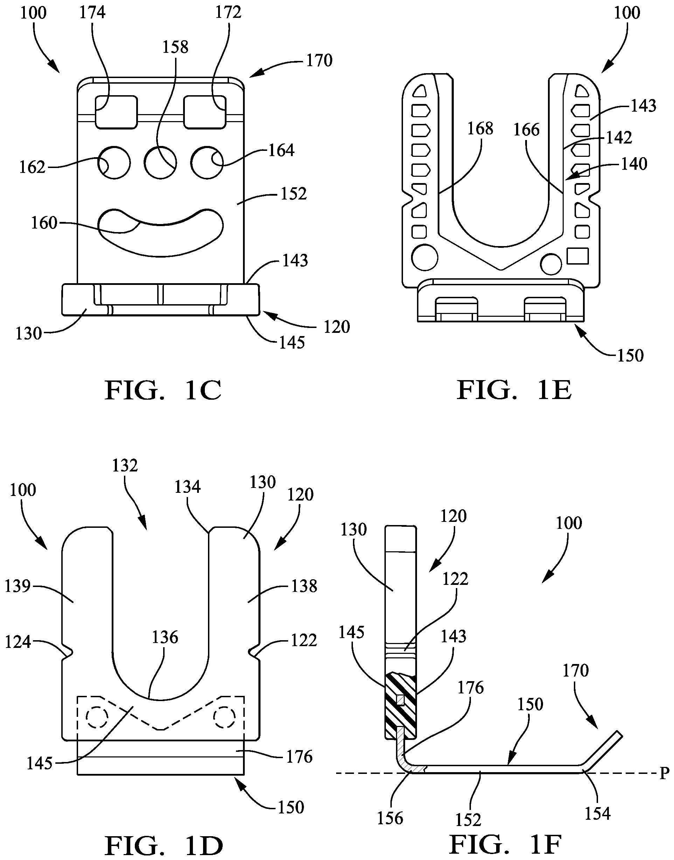

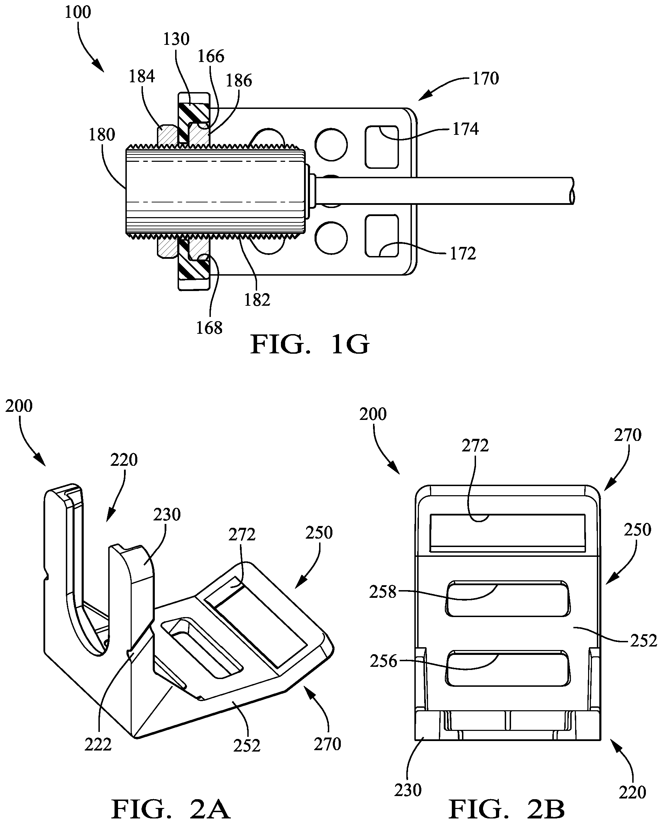

This Detailed Description refers to the accompanying drawing figures. The same reference numbers in different drawing figures may identify the same or similar features, elements, and/or components. In this Detailed Description, the first digit(s) of a call-out number may correlate with the first figure number in which the call-out number is labeled. For example, call-out numbers that start with a 1 (e.g., fixing 100, body portion 120) may represent details first called out with respect to FIGS. 1A-1G.

Referring to FIGS. 1A-1G, a first embodiment of a sensor mount fixing 100 is illustrated. The sensor mount fixing 100 (fixing 100) may be utilized in a system 190 that includes a sensor 180 that includes one or more of a sensor housing 182, a first locknut 184 that includes a face 186, a second locknut 188, a support structure 196, at least one strap 198, and at least one elongated article 194.

The fixing 100 includes a body portion 120 that is configured to mount on a support structure 196 of a workpiece. For example, the body portion 120 may include a connector portion that is configured to attach to the support structure. A connector portion may include any common connection manner, including, but not limited to, a fastener (e.g., a blind hole fastener, a clamp fastener, a mechanical fastener (e.g., a screw mount), a T-nut fastener for a T-slot metal frame, an arrowhead fastener, a fir-tree fastener, a mounting edge clip, a twist-lock fastener configured for receipt into a slot of a rail, a weld stud mount, a cable attachment, a hose attachment), an adhesive fastener (e.g., double-sided adhesive tape), a weld, a magnet, a friction fit, and the like, and combinations thereof (e.g., a fastener and an adhesive fastener, an adhesive fastener and a magnet). A connector portion may be configured to engage an elongated fastener (e.g., a stud, a threaded bolt) that extends from the workpiece, may be configured to clamp onto an edge of the workpiece (e.g., utilizing an edge clip), and/or the like.

The connector portion is a base portion 150, which includes a surface mount portion 152 that is configured to mount the base portion 150 on the support structure 196. The base portion 150 may be configured for adjustable attachment (e.g., in multiple mount positions) to the support structure 196. The surface mount portion 152 includes at least one mount hole defined therethrough. A first portion (e.g., a threaded shaft) of a mechanical fastener (e.g., a screw) may be passed through one or more of the mount holes and into the workpiece to attach the fixing 100 to the workpiece at a desired position. For example, the mechanical fastener may be configured to engage a mount aperture (e.g., a slot, a channel, a bore, a threaded hole) that is defined in the mount surface of the workpiece to mount the fixing 100 to the workpiece.

Through the utilization of a plurality of mount holes, multiple mount positions for the fixing 100 are facilitated. In the aspect illustrated in FIGS. 1A-1G, the surface mount portion 152 includes an arc-shaped mount hole 160 and a pivot mount hole 158. In this configuration, a technician may pass a first portion (e.g., a threaded shaft) of a mechanical fastener (e.g., screw 192) through the pivot mount hole 158 and into the workpiece to create a pivot point. The fastener may be left loose enough that the fixing 100 can be pivoted around the pivot point to a desired position by the technician. Upon positioning in the desired position, the technician can tighten the first mechanical fastener (e.g., screw 192) and/or a second mechanical fastener (e.g., screw 193) passed through a second mount hole to fix the fixing 100 in position. In aspects, the second mount hole is an arc-shaped mount hole 160 that is configured to permit rotation of the connector portion at the pivot point while first and second mechanical fasteners engage the respective first and second mount holes. In such a configuration, the fastener in the arc-shaped mount hole 160 can be loosened and the connector portion pivoted at the pivot point. In the aspect illustrated in FIGS. 1A-1G, the surface mount portion 152 further includes a pair of flank mount holes (e.g., flank mount hole 162, flank mount hole 164), which can further and/or alternatively be utilized for attachment of the surface mount portion 152 to the support structure 196. In aspects, one or more of the mount hole(s) may be omitted.

The base portion 150 may further include a saddle portion (e.g., a saddle portion 170 that extends from the surface mount portion 152). The saddle portion 170 may define at least one strap mount (e.g., strap mount 172, strap mount 174) that is configured to receive a strap 198 (e.g., a cable tie, strapping material, a hook-and-loop fastening strap, a plastic band, a metal band, string, twine, a wire, and the like). The saddle portion 170 may extend from the surface mount portion 152 at a first end 154 of the surface mount portion 152. In the aspect illustrated in FIGS. 1A-1G, the saddle portion 170 extends from the surface mount portion 152 at an angle relative to a plane (P) of the surface mount portion 152. The strap mount (e.g., strap mount 172, strap mount 174) defines a passageway through the saddle portion 170 that is configured to receive the strap 198 to attach an elongated article 194 (e.g., wires, hoses, tubes, cables, conduit, and the like) thereof to the strap mount. In aspects, the saddle portion 170 may be omitted. The base portion 150 may include a flange portion 176 that extends from the surface mount portion 152 at a second end 156 of the surface mount portion 152. The first end 154 and the second end 156 may be opposite ends of the surface mount portion 152. In aspects, the flange portion 176 may be omitted.

The fixing 100 is configured to receive, secure, and/or support a sensor 180 relative to the support structure 196 of the workpiece (e.g., a machine, a cabinet, a housing, a frame, an enclosure, a vehicle chassis, a panel, a rail, a support beam, and the like). The fixing 100 includes a sensor mount portion 130 that is configured to connect the sensor 180 to the body portion 120. In the aspect illustrated in FIGS. 1A-1G, the sensor mount portion 130 receives a sensor housing 182 of the sensor 180, which extends into the body portion 120. The sensor mount portion 130 includes a slot 132 that is configured to slidingly receive the sensor 180 (e.g., sensor housing 182). The slot 132 includes an open top end 134 at a top side of the body portion 120 and a closed bottom end 136 that is opposite the open top end 134. In the aspect illustrated in FIGS. 1A-1G, the slot 132 extends through the body portion 120 in a direction that is perpendicular to the base portion 150. The slot 132 defines a pair of vertically extending arms (e.g., first arm 138, second arm 139) that are spaced apart to define the slot 132. The slot 132 is configured to permit vertical sensor adjustment of the sensor 180. For example, the sensor 180 may be mounted on the sensor mount portion 130 at a plurality of positions along the slot 132. In this way, the fixing 100 is configured for adjustable attachment to the sensor 180.

The body portion 120 further includes a locknut retainer 140 that is configured to retain a first locknut 184 engaged with the sensor housing 182 against rotation during a turning (e.g., a tightening, a loosening) of a second locknut 188 engaged with the sensor housing 182. In aspects, the locknut retainer 140 may be omitted. The locknut retainer 140 may include an inner surface 143 opposite an outer surface 145. At least one of the inner surface 143 or the outer surface 145 may define at least one recess (e.g., recess 142), which is dimensioned to accommodate the first locknut 184. The recess 142 may include a recess bottom 144 that is configured to receive a face 186 of the first locknut 184. The recess 142 may include one or more side walls (e.g., side wall 166, side wall 168) that correspond to one or more sides of the first locknut 184 to limit a rotational movement of the first locknut 184 positioned in the recess 142. The side walls may define a locknut pocket that is configured to receive a locknut. A side wall may be configured to engage a side of the first locknut 184 to prevent rotation of the first locknut 184 during a turning (e.g., a tightening, a loosening) of the second locknut 188. When engaged, the first locknut 184 may abut against the inner surface 143 of the locknut retainer 140 and the second locknut 188 may abut against the outer surface 145 of the locknut retainer 140. In this way, the threaded locknuts (e.g., first locknut 184, second locknut 188) may be utilized to attach the sensor housing 182 to the fixing 100.

In aspects, the first locknut 184 is a hexagonal locknut and the recess 142 includes at least a partial hexagonal profile section configured to receive the first locknut 184. The locknut retainer 140 may be defined on the inner surface 143 and/or the outer surface 145. When tightened, the first locknut 184 bears against a first side of the sensor mount portion 130 and the second locknut 188 bears against a second side of the sensor mount portion 130, with the sensor mount portion 130 jammed or otherwise compressed therebetween.

The body portion 120 may further include one or more sensor alignment indicia (e.g., alignment indicia 122, alignment indicia 124) that are provided as a visual reference point to guide the technician when mounting the sensor 180 to the sensor mount portion 130. The sensor alignment indicia may guide the technician to align and/or position the sensor 180 in a center position, a low position, a high position, and the like. The sensor alignment indicia may be configured as an elevation reference point that indicates the default installed height of the sensor when the center of sensor housing is installed resting in or on the bottom of a cradle of the body portion, as illustrated in FIG. 1B. In this way, the technician can increase the desired sensor housing elevation by raising the sensor housing above the bottom of the cradle. The total raised elevation height can be determined by measuring the elevation reference point in relation to the center of the sensor housing.

The sensor alignment indicia may include location grooves, marks, notches, and the like, which are defined in a surface of the body portion 120. For example, in the aspect illustrated in FIGS. 1A-1G, the sensor alignment indicia (e.g., alignment indicia 122, alignment indicia 124) include one or more notches located in an outer edge of the body portion 120. In aspects, the alignment indicia may be omitted.

The base portion 150 is formed of a metal material and the body portion 120 is formed of a polymeric material. The plastic body portion 120 may attach to the base portion 150 through a suitable fabrication process, which may include overmolding, heat staking, snap-fit attachment, a mechanical fastening, and the like.

Referring now to FIGS. 2A and 2B, a second embodiment of a sensor mount fixing 200 is illustrated. The sensor mount fixing 200 (fixing 200) is similar to the sensor mount fixing 100 illustrated in FIGS. 1A-1G and described above, except as detailed below. Thus, the fixing 200 includes a body portion 220, sensor alignment indicia 222, a sensor mount portion 230, a base portion 250, a surface mount portion 252, a saddle portion 270, a mount hole (e.g., mount hole 256, mount hole 258), and a strap mount 272. The fixing 200 may be utilized in a system that includes one or more of a sensor (e.g., sensor 180) that includes a sensor housing (e.g., sensor housing 182), a first locknut (e.g., first locknut 184), a second locknut (e.g., second locknut 188), a support structure (e.g., support structure 196), a strap (e.g., strap 198), and/or an elongated article (e.g., elongated article 194). In the fixing 200, the base portion 250 and the body portion 220 are both formed of a polymeric material. In aspects, one or more of the mount hole(s), the saddle portion 270 and/or the sensor alignment indicia 222 may be omitted.

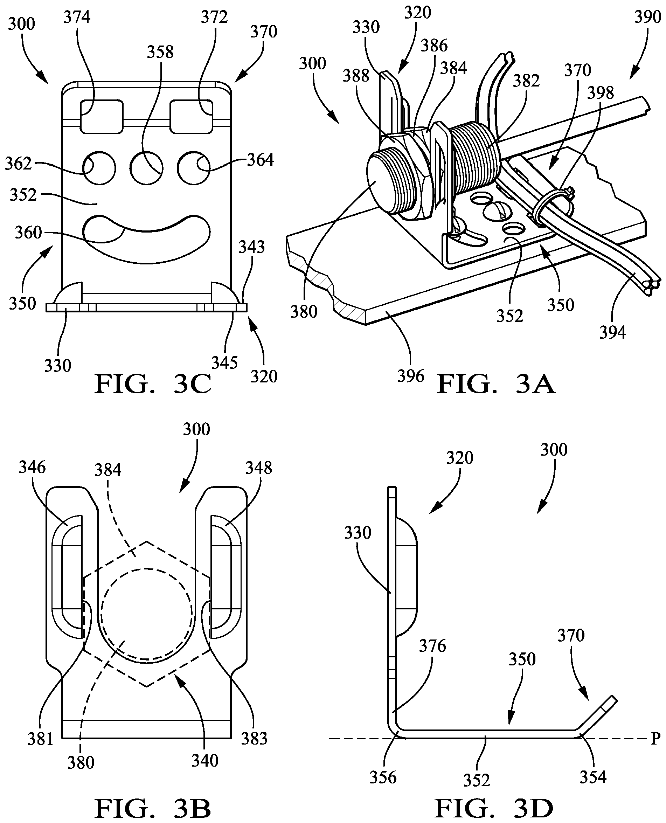

Referring now to FIGS. 3A-3D, a third embodiment of a sensor mount fixing 300 is illustrated. The sensor mount fixing 300 (fixing 300) is similar to the sensor mount fixing 100 illustrated in FIGS. 1A-1G and described above, except as detailed below. Thus, the fixing 300 includes a body portion 320, sensor mount portion 330, locknut retainer 340, base portion 350, surface mount portion 352, first end 354, second end 356, pivot mount hole 358, arc-shaped mount hole 360, flank mount hole 362, flank mount hole 364, saddle portion 370, strap mount 372, strap mount 374, and flange portion 376. The fixing 300 may be utilized in a system 390 that includes at least one of a sensor 380 that includes a sensor housing 382, a first locknut 384 that includes a face 386, a second locknut 388, a support structure 396, at least one strap 398, and/or at least one elongated article 394. In aspects, one or more of the mount hole(s), the saddle portion 370, the flange portion 376, and/or the locknut retainer 340 may be omitted. As described herein, the components of a sensor mount fixing may be formed (e.g., fabricated, molded, stamped) of a metal material.

The locknut retainer 340 is configured to retain the first locknut 384 that is engaged with the sensor housing 382 against rotation during a turning (e.g., a tightening, a loosening) of the second locknut 388 that is also engaged with the sensor housing 382. The locknut retainer 340 includes an inner surface 343 opposite an outer surface 345. At least one of the inner surface 343 or the outer surface 345 defines at least one flange (e.g., a rear slot, a lanced louver, a protruding elongated anti-rotation members) that is configured to engage a side of the first locknut 384 to prevent the rotation of the first locknut 384 during a turning (e.g., a tightening, a loosening) of the second locknut 388. The locknut retainer 340 may be defined on the inner surface 343 and/or the outer surface 345. When tightened, the first locknut 384 bears against a first side of the sensor mount portion 330 and the second threaded locknut 388 bears against a second side of the sensor mount portion 330, with the sensor mount portion 330 jammed or otherwise compressed therebetween.

The inner surface 343 of the locknut retainer 340 defines a first flange 346 and a second flange 348, which define a locknut pocket that is configured to receive a locknut. The first flange 346 and the second flange 348 are configured to engage a side (e.g., first side 381, second side 383) of the first locknut 384 to prevent the rotation of the first locknut 384 during a turning (e.g., a tightening, a loosening) of the second locknut 388. When so engaged, the first locknut 384 may abut against the inner surface 343 of the locknut retainer 340 and the second locknut 388 may abut against the outer surface 345 of the locknut retainer 340. In this way, the threaded locknuts (e.g., first locknut 384, second locknut 388) may be utilized to attach the sensor housing 382 to the fixing 300. In the aspect of FIGS. 3A-3D, the base portion 350 and the body portion 320 are formed at least in part of at least one metal material. The locknut pocket may be stamped into the body portion 320 to form at least one raised-edge flange.

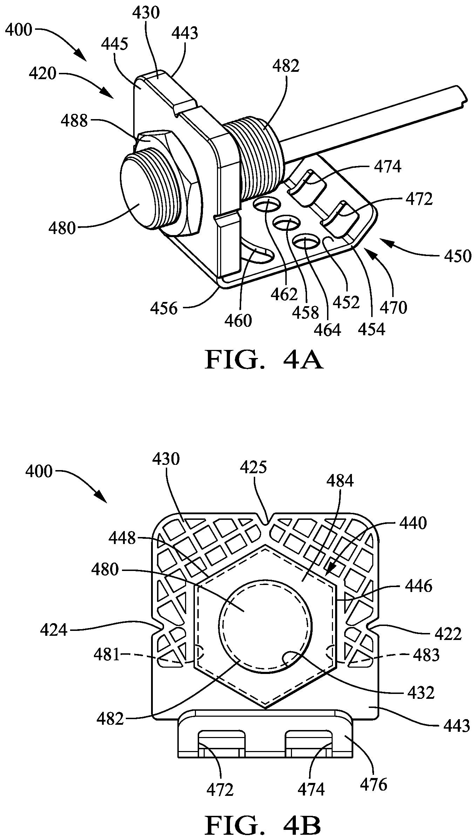

Referring now to FIGS. 4A and 4B, a fourth embodiment of a sensor mount fixing 400 is illustrated. The sensor mount fixing 400 (fixing 400) is similar to the sensor mount fixing 100 illustrated in FIGS. 1A-1G and described above, except as detailed below. Thus, the fixing 400 includes a body portion 420, sensor alignment indicia 422, sensor alignment indicia 424, sensor alignment indicia 425, a sensor mount portion 430, a locknut retainer 440, a base portion 450, a surface mount portion 452, a first end 454, a second end 456, a pivot mount hole 458, an arc-shaped mount hole 460, a flank mount hole 462, a flank mount hole 464, a saddle portion 470, a strap mount 472, a strap mount 474, and a flange portion 476. The fixing 400 may be utilized in a system that includes at least one of a sensor 480 that includes a sensor housing 482, a first locknut 484 that includes a face (not illustrated), a second locknut 488 (not illustrated), a support structure (e.g., support structure 196), at least one strap (e.g., strap 198), and/or at least one elongated article (e.g., elongated article 194). In aspects, one or more of the mount hole(s), the saddle portion 470, the flange portion 476, the locknut retainer 440, and/or the sensor alignment indicia 422, 424, 425 may be omitted.

The fixing 400 is configured to receive, secure, and/or support a sensor 480 relative to a support structure of a workpiece. The sensor mount portion 430 is configured to connect the sensor 480 to the body portion 420. The sensor mount portion 430 receives the sensor housing 482 of the sensor 480, which extends through the body portion 420. An aperture 432 is defined through the sensor mount portion 430. The aperture 432 is configured to receive the sensor housing 482 (e.g., a cylindrical housing of the sensor) therethrough, as illustrated in FIG. 4A. The aperture 432 may be circular, ovular, or another shape. In the aspect of FIGS. 4A and 4B, the aperture 432 has a circular shape.

The locknut retainer 440 is configured to retain the first locknut 484 that is engaged with the sensor housing 482 against rotation during a turning (e.g., a tightening, a loosening) of the second locknut 488 that is also engaged with the sensor housing 482. The sensor mount portion 430 includes an inner surface 443 opposite an outer surface 445. The locknut retainer 440 may be defined in at least one of the inner surface 443 or the outer surface 445. The locknut retainer 440 may be configured to engage a side of the first locknut 484 to prevent the rotation of the first locknut during a turning (e.g., a tightening, a loosening) of the second locknut 488. In this way, the locknut retainer 440 may be defined on the inner surface 443 and/or the outer surface 445. When tightened, the first locknut 484 bears against a first side (e.g., inner surface 443) of the sensor mount portion 430 and the second threaded locknut 488 bears against a second side (outer surface 445) of the sensor mount portion 430, with the sensor mount portion 430 jammed or otherwise compressed therebetween.

The inner surface 443 of the locknut retainer 440 defines one or more sidewalls (e.g., first flange 446, second flange 448) that define a locknut pocket that is dimensioned to receive a locknut. The sidewalls are configured to engage a side (e.g., first side 481, second side 483) of the first locknut 484. The sidewalls correspond to one or more sides of the first locknut 484 to limit a rotational movement of the first locknut 484 positioned therein to prevent the rotation of the first locknut 184 during a turning (e.g., a tightening, a loosening) of the second locknut 488. When so engaged, the first locknut 484 may abut against the inner surface 443 of the locknut retainer 440 and the second locknut 488 may abut against the outer surface 445 of the locknut retainer 440. In this way, the threaded locknuts may be utilized to attach the sensor housing 482 to the fixing 400. In aspects, the first locknut 484 is a hexagonal locknut and the locknut pocket includes at least a partial hexagonal profile section that is configured to receive the first locknut 484.

In the aspect illustrated in FIGS. 4A and 4B, the base portion 450 includes a metal material and the body portion 420 includes a polymeric material. The plastic body portion 420 may attach to the base portion 450 through a suitable fabrication process, including overmolding, heat staking, snap-fit attachment, a mechanical fastening, and the like.

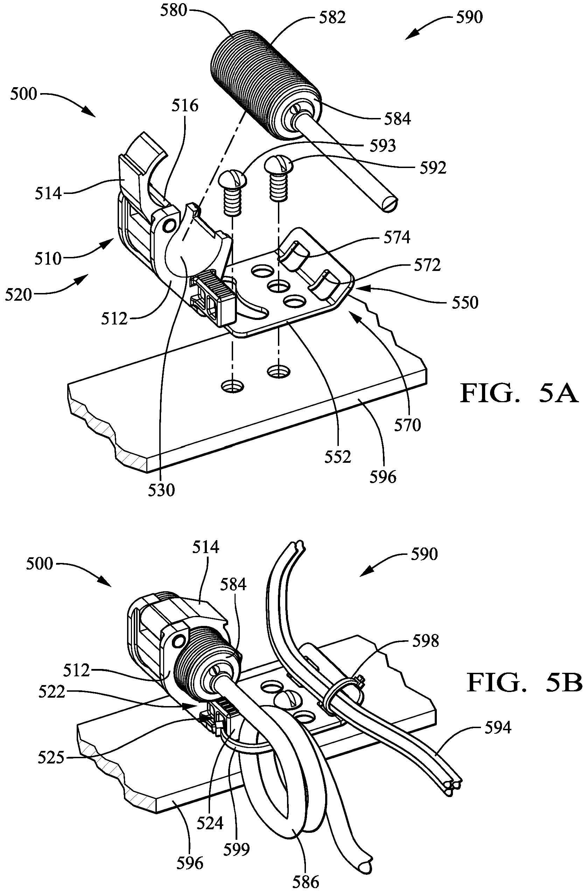

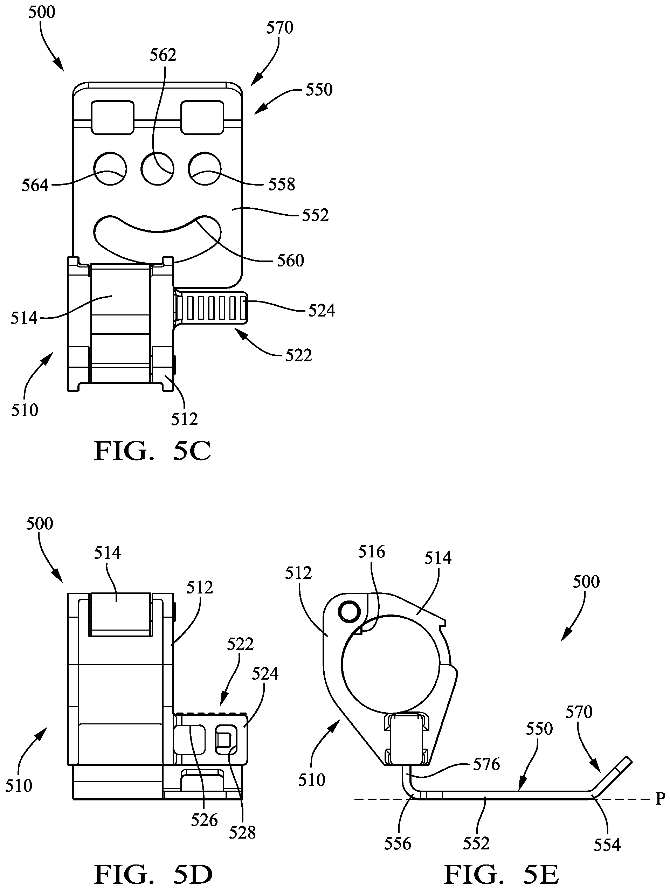

Referring now to FIGS. 5A-5E, a fifth embodiment of a sensor mount fixing 500 is illustrated. The sensor mount fixing 500 (fixing 500) is similar to the sensor mount fixing 100 illustrated in FIGS. 1A-1G and described above, except as detailed below. Thus, the fixing 500 includes a body portion 520, sensor alignment indicia 522, a sensor mount portion 530, a base portion 550, a surface mount portion 552, a first end 554, a second end 556, a pivot mount hole 558, an arc-shaped mount hole 560, a flank mount hole 562, a flank mount hole 564, a saddle portion 570, a strap mount 572, a strap mount 574, and a flange portion 576. The fixing 500 may be utilized in a system 590 that includes a sensor 580 that includes a sensor housing 582, a support structure (e.g., support structure 596), at least one strap (e.g., strap 598), and at least one elongated article (e.g., elongated article 594). In aspects, one or more of the mount hole(s), the saddle portion 570, the flange portion 576, a locknut retainer, and/or the sensor alignment indicia 522 may be omitted.

The fixing 500 includes the body portion 520 that is configured to mount on the support structure 596 (e.g., a mechanical fastener as described above with respect to the fixing 100). For example, the surface mount portion 552 may include one or more of the arc-shaped mount hole 560, the pivot mount hole 558, the flank mount hole 562, the flank mount hole 564, and the like. The surface mount portion 552 may be configured to receive a first portion (e.g., threaded shaft) of a mechanical fastener (e.g., screw 592, screw 593) therethrough and into the support structure 596.

The body portion 520 includes the sensor mount portion 530 that is configured to receive the sensor housing 582 through the body portion 520 and a clamp portion 510 that is configured to clamp onto the sensor housing 582 to retain the sensor housing 582 in the fixing 500. The body portion 520 may include one or more sensor alignment indicia 522 (e.g., the alignment indicia 122 described above with respect to the fixing 100). In FIGS. 5A-5E, the sensor alignment indicia 522 are defined on an arm 524 of the body portion 520, the sensor alignment indicia 522 extending laterally from the clamp portion 510 to provide visual alignment indicia for an end portion 584 of the sensor housing 582.

The clamp portion 510 includes an over-center mechanism (e.g., over-center cam) that is configured to hold the sensor 580 in place. The clamp portion 510 includes a receiver portion 512 configured to receive the sensor housing 582 and a lever arm 514 that is pivotally connected to the receiver portion 512. The clamp portion 510 is configured to drive the lever arm 514 from an unlocked position (illustrated in FIG. 5A) past over center to a locked position (illustrated in FIG. 5B) where the clamp portion 510 engages with the sensor housing 582 to hold the sensor 580 in the receiver portion 512. The receiver portion 512 may flex to facilitate the over-center action. In aspects, the lever arm 514 defines a cam 516 that engages the sensor housing 582 (e.g., engages one or more threads defined on the sensor housing 582). In use, a technician may operate the clamp portion 510 to drive the lever arm 514 from the unlocked position over center to the locked position. In such a configuration, no tools may be required to secure the sensor 580 to the body portion 520.

In aspects, the base portion 550 includes the surface mount portion 552 that is configured to mount the base portion 550 to the support structure 596. An example of a surface mount portion 552 is the surface mount portion 152 described above with respect to the fixing 100. The receiver portion 512 may be configured to receive the sensor housing 582 inserted at a 45-degree angle, which may make it easier for the clamp portion 510 to be opened when the base portion 550 is positioned against a wall or another planar surface.

In aspects, the base portion 550 includes the saddle portion 570 that extends from the surface mount portion 552. An example of a saddle portion 570 is the saddle portion 170 described above with respect to the fixing 100. The saddle portion 570 extends from the surface mount portion 552 at the first end 554 of the surface mount portion 552. The saddle portion 570 may extend from the surface mount portion 552 at an angle relative to a plane (P) of the surface mount portion 552. The saddle portion 570 defines at least one strap mount 572 configured to receive a strap 598. The strap mount 572 defines a passageway through the saddle portion 570 that is configured to receive the strap 598 to attach an elongated article 594 to the strap mount 572. The elongated article 594 may include a parallel routing of the wiring of other components. The strap 598 may attach the elongated article 594 relative to a Z-axis of the fixing 500. The elongated article 594 may also include the cable 586 of the sensor 580.

In aspects, the arm 524 of the body portion 520 may include a saddle portion 525 that defines at least one strap mount (e.g., strap mount 526, strap mount 528). The strap mount may define at least one passageway through the body portion 520 that is configured to receive a strap (e.g., strap 599) to attach an elongated article (e.g., a service loop of the cable 586 of the sensor 580, the sensor housing) to the body portion 520 at the strap mount (e.g., strap mount 526, strap mount 528), as illustrated in FIG 5B. The strap 599 may attach the elongated article (e.g., cable 586) relative to a Y-axis of the fixing 500.

In aspects, the base portion 550 includes the flange portion 576 that extends from the surface mount portion 552. An example of a flange portion 576 is the flange portion 176 described above with respect to the fixing 100. The flange portion 576 is configured to orient the base portion 550 relative to the body portion 520. The flange portion 576 extends from the surface mount portion 552 at a second end 556 of the surface mount portion 552. The first end 554 and the second end 556 may be opposite ends.

Some additional examples of sensor mount fixing techniques and apparatuses are as follows:
Example 1. A fixing comprising: a body portion, the body portion configured to mount on a support structure, the body portion comprising: a sensor mount portion configured to receive a sensor housing through the body portion; and a locknut retainer configured to retain a first locknut engaged with the sensor housing against rotation during a turning of a second locknut engaged with the sensor housing.
Example 2. The fixing of Example 1, wherein the locknut retainer defines a recess dimensioned to accommodate the first locknut, the recess including a recess bottom configured to receive a face of the first locknut.
Example 3. The fixing of Example 2, wherein the recess includes a plurality of side walls that correspond to one or more sides of the first locknut to limit a rotational movement of the first locknut positioned in the recess.
Example 4. The fixing of Example 3, wherein the first locknut is a hexagonal locknut, and wherein the recess includes a hexagonal profile section configured to receive the first locknut.
Example 5. The fixing of Example 1, further comprising: a base portion that includes a surface mount portion configured to mount the base portion on the support structure.
Example 6. The fixing of Example 5, further comprising: a saddle portion that extends from the surface mount portion, the saddle portion defining at least one strap mount configured to receive a strap.
Example 7. The fixing of Example 6, wherein the saddle portion extends from the surface mount portion at a first end of the surface mount portion, wherein the base portion includes a flange portion that extends from the surface mount portion at a second end of the surface mount portion, and wherein the first and second ends are opposite ends of the surface mount portion.
Example 8. The fixing of Example 6, wherein the saddle portion extends from the surface mount portion at an angle relative to a plane of the surface mount portion.
Example 9. The fixing of Example 6, wherein the strap mount defines a passageway through the saddle portion that is configured to receive the strap to attach an elongated article to the strap mount.
Example 10. The fixing of Example 5, wherein the body portion further comprises one or more sensor alignment indicia.
Example 11. The fixing of Example 5, wherein the base portion and the body portion are comprised of at least one metal material.
Example 12. The fixing of Example 5, wherein the base portion is comprised of a metal material and wherein the body portion is comprised of a polymeric material.
Example 13. The fixing of Example 12, wherein the body portion is overmolded onto the base portion.
Example 14. The fixing of Example 5, wherein the base portion and the body portion are comprised of at least one polymeric material.
Example 15. A fixing comprising: a body portion, the body portion configured to mount on a support structure, the body portion comprising: a sensor mount portion configured to receive a sensor housing through the body portion; and a clamp portion configured to clamp onto the sensor housing to retain the sensor housing.
Example 16. The fixing of Example 15, wherein the clamp portion further comprises: a receiver portion configured to receive the sensor housing; and a lever arm pivotally connected to the receiver portion, the clamp portion configured to drive the lever arm from an unlocked position past over center to a locked position engaging the clamp portion with the sensor housing and holding the sensor housing in the receiver portion.
Example 17. The fixing of Example 15, further comprising: a base portion including: a surface mount portion configured to mount the base portion to the support structure; a saddle portion that extends from the surface mount portion, the saddle portion defining at least one strap mount configured to receive a strap; and a flange portion that extends from the surface mount portion, the flange portion configured to orient the base portion relative to the body portion.
Example 18. The fixing of Example 17, wherein the saddle portion extends from the surface mount portion at a first end of the surface mount portion, wherein the flange portion extends from the surface mount portion at a second end of the surface mount portion, and wherein the first and second ends are opposite ends.
Example 19. The fixing of Example 17, wherein the saddle portion extends from the surface mount portion at an angle relative to a plane of the surface mount portion.
Example 20. The fixing of Example 17, wherein the strap mount defines a passageway through the saddle portion that is configured to receive the strap to attach an elongated article to the strap mount.

In this description of sensor mount fixing techniques and apparatuses, ordinal numbers such as "first" and "second" are used only to distinguish between different described objects, and have no limitation on a location, a sequence, a priority, a quantity, content, or the like of the described objects. For example, a "first strap mount" is used as an example, and there may be one or more "strap mounts." Additionally, objects modified by different ordinal numbers may be the same or different objects. For example, if the described object is a "strap mount," a "first strap mount" and a "second strap mount" may be the same or different strap mounts.

Unless context dictates otherwise, use herein of the word "or" may be considered use of an "inclusive or," or a term that permits inclusion or application of one or more items that are linked by the word "or" (e.g., a phrase "A or B" may be interpreted as permitting just "A," as permitting just "B," or as permitting both "A" and "B"). Also, as used herein, a phrase referring to "at least one of' a list of items refers to any combination of those items, including single members. For instance, "at least one of a, b, or c" can cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c, or any other ordering of a, b, and c). Further, items represented in the accompanying figures and terms discussed herein may be indicative of one or more items or terms, and thus reference may be made interchangeably to single or plural forms of the items and terms in this written description.

In the Summary above, in this Detailed Description, and in the accompanying Drawings, reference is made to particular features of the sensor mount fixing techniques and apparatuses. It is to be understood that the disclosure of the sensor mount fixing techniques and apparatuses in this specification does not include all possible combinations of such particular features. For example, where a particular feature is disclosed in the context of a particular aspect or embodiment, that feature can also be used, to the extent possible, in combination with and/or in the context of other particular aspects and embodiments of sensor mount fixing techniques and apparatuses generally. Although implementations of sensor mount fixing techniques and apparatuses have been described in language specific to certain features and/or methods, the subject of the appended claims is not necessarily limited to the specific features or methods described. Rather, the specific features and methods are disclosed as example implementations of sensor mount fixing techniques and apparatuses.

## Claims

1. A fixing comprising:
a body portion, configured to mount on a support structure, the body portion comprising:
a sensor mount portion configured to receive a sensor housing through the body portion; and
a locknut retainer configured to retain a first locknut engaged with the sensor housing against rotation during a turning of a second locknut engaged with the sensor housing.

2. The fixing of claim 1, wherein the locknut retainer defines a recess dimensioned to accommodate the first locknut, the recess including a recess bottom configured to receive a face of the first locknut.

3. The fixing of claim 2, wherein the recess includes a plurality of side walls that correspond to one or more sides of the first locknut to limit a rotational movement of the first locknut positioned in the recess.

4. The fixing of any one of claims 2 to 3, wherein the first locknut is a hexagonal locknut, and wherein the recess includes a hexagonal profile section configured to receive the first locknut.

5. The fixing of any one of claims 1 to 4, further comprising:
a base portion that includes a surface mount portion configured to mount the base portion on the support structure.

6. The fixing of claim 5, further comprising:
a saddle portion that extends from the surface mount portion, the saddle portion defining at least one strap mount configured to receive a strap.

7. The fixing of any one of claims 6 or 17, wherein the saddle portion extends from the surface mount portion at a first end of the surface mount portion, wherein the base portion includes a flange portion that extends from the surface mount portion at a second end of the surface mount portion, and wherein the first and second ends are opposite ends of the surface mount portion.

8. The fixing of any one of claims 6 to 7 or of claim 17, wherein the saddle portion extends from the surface mount portion at an angle relative to a plane of the surface mount portion.

9. The fixing of any one of claims 6 to 8 or of claim 17, wherein the strap mount defines a passageway through the saddle portion that is configured to receive the strap to attach an elongated article to the strap mount.

10. The fixing of any one of claims 1 to 9, wherein the body portion further comprises one or more sensor alignment indicia.

11. The fixing of any one of claims 5 to 9, wherein the base portion and the body portion are comprised of at least one metal material.

12. The fixing of any one of claims 5 to 9 , wherein the base portion is comprised of a metal material and wherein the body portion is comprised of a polymeric material.

13. The fixing of any one of claims 12 or 14, wherein the body portion is overmolded onto the base portion.

14. The fixing of any one of claims 5 to 9, wherein the base portion and the body portion are comprised of at least one polymeric material.

15. A fixing comprising:
a body portion configured to mount on a support structure, the body portion comprising:
a sensor mount portion configured to receive a sensor housing through the body portion; and
a clamp portion configured to clamp onto the sensor housing to retain the sensor housing.

16. The fixing of claim 15, wherein the clamp portion further comprises:
a receiver portion configured to receive the sensor housing; and
a lever arm pivotally connected to the receiver portion, the clamp portion configured to drive the lever arm from an unlocked position past over center to a locked position engaging the clamp portion with the sensor housing and holding the sensor housing in the receiver portion.

17. The fixing of claim 15, further comprising:
a base portion including:
a surface mount portion configured to mount the base portion to the support structure;
a saddle portion that extends from the surface mount portion, the saddle portion defining at least one strap mount configured to receive a strap; and
a flange portion that extends from the surface mount portion, the flange portion configured to orient the base portion relative to the body portion.
